# EUROPÄISCHE PATENTSCHRIFT

(11) **EP 1 030 042 B1**
(45) Veröffentlichungstag und Bekanntmachung des Hinweises auf die Patenterteilung: **12.11.2003**
(21) Anmeldenummer: 00100325.0
(22) Anmeldetag: 07.01.2000
(51) Int. Cl.: F02D 13/02, F02D 41/18

(54) **Verfahren zur Bestimmung der Zylinderbefüllung bei ungedrosselten Verbrennungsmotoren**
Method for determining the cylinder air filling of an engine without throttle
Méthode de determination du remplissage d'air d'un cylindre d'un moteur à combustion sans papillon

(30) Priorität: 18.02.1999 DE 19906707
(43) Veröffentlichungstag der Anmeldung: 23.08.2000
(73) Patentinhaber: Bayerische Motoren Werke Aktiengesellschaft, 80809 München (DE)
(72) Erfinder: Kraemer, Gerd, 82065 Baierbrunn (DE)

(56) Entgegenhaltungen:
- EP-A- 0 831 218
- DE-A- 19 620 883
- US-A- 5 590 632
- US-A- 5 698 779

## Beschreibung

Die Erfindung betrifft ein Verfahren zur Bestimmung der Zylinderbefüllung bei ungedrosselten Verbrennungsmotoren, welche Ventile mit variablem Ventiltrieb umfaßt.

Bei gedrosselten Motoren wird die Füllung (Luftmassen) der Zylinder des Motors meist gemessen. Für dynamische Übergänge wird parallel über ein Füllungsmodell die Füllung modellhaft berechnet und mit der vorgenannten Messung abgeglichen. Über den Saugrohrdruck und eine variable Nockenspreizung kann ferner eine Korrektur der berechneten Füllung durchgeführt werden.

Für ungedrosselte Motoren ist das oben beschriebene Füllungsmodell jedoch nicht brauchbar. Es besteht nämlich kein Zusammenhang zwischen dem Saugrohrdruck und der Zylinderfüllung. Die Kenntnis der Zylinderbefüllung ist für den dynamischen Motorbetrieb von Motoren mit variablem Ventiltrieb sowie für die Diagnose- und Sicherheitsfunktionen jedoch notwendig.

Aufgabe der vorliegenden Erfindung ist es daher, ein Verfahren zur Bestimmung der Zylinderfüllung bei ungedrosselten Verbrennungsmotoren anzugeben, welches eine möglichst genaue Füllungsbestimmung ermöglicht.

Diese Aufgabe wird durch die im Anspruch 1 genannten Merkmale gelöst.

Insbesondere wird zunächst ein auf eine feste oder bekannte Ein- und Auslaßspreizung bezogener normierter Luftmassenstrom in Abhängigkeit von zumindest einer Motorgröße bestimmt Die Motorgrößen sind beispielsweise die Drehzahl und die Ventilhubhöhe. Femer wird der Einfluß der vorliegenden Ist-Einlaßspreizung gegenüber der angenommenen festen oder bekannten Einlaßspreizung bestimmt und ein korrigierter Luftmassenstrom ermittelt. Insbesondere wird mit dem vorgenannten Vorgehen der Einfluß von Einlaß- (und bei den vorteilhaften Ausführungsformen) auch Auslaßspreizungen auf den Ansaugvorgang eines Motors mit variablem Ventiltrieb durch Berücksichtigung von geometrischen und physikalischen "Effekten" beschrieben. Appliziert werden müssen hier nur noch Daten des Luftmassendurchsatzes bei bestimmten Spreizungen, z. B. in Form von Kennfeldern. In einem Kennfeld kann auch der angesaugte Luftmassenstrom bei festen Einlaß- und Auslaßspreizungen (z. B. 120/120) und bei Normbedindungen (z. B. 0 ° C und 1013 mbar) abgelegt sein.

In diesem Zusammenhang wird noch angemerkt, daß der normierte Luftmassenstrom nicht unbedingt aus einer festen Spreizung ermittelt werden muß. Er kann auch bei einer beliebigen Spreizung aus einem Kennfeld ausgelesen werden. Die Funktion berücksichtigt dann den Einfluß der Abweichung Ist- zu Sollspreizung. Der Eingang für die Sollspreizung kann beispielsweise aus einem lastabhängigen Kennfeld stammen.

Bei Motoren mit variablem Ventiltrieb erfolgt die Drosselung bekannterweise über das Einlaßventil. Deshalb ist die über das Einlaßventil strömende Luftmasse proportional zur freigegebenen Drosselfläche und abhängig vom Differenzdruck. Diese Effekte werden gemäß einer vorteilhaften Ausführungsform zur Bestimmung des Einflusses der Ist-Einlaßspreizung berücksichtigt. Falls die Einlaßspreizung also von der Normspreizung abweicht, wird der Einfluß einer geänderten Einlaßspreizung auf den Luftmassenstrom durch den Flächenanteil und den Differenzdruckanteil beschrieben. Dies ist genauer im nachfolgenden Ausführungsbeispiel dargestellt.

Einen Einfluß auf die Zylinderfüllung hat auch die Auslaßspreizung. Zur genauen Bestimmung der Zylinderfüllung wird vorzugsweise der Einfluß der Auslaßspreizung durch das Verhältnis der Auslaßventilfläche nach dem oberen Totpunkt beschrieben. Eine spezielle Ausführungsform der Erfindung wird nachfolgend mit Bezug auf die Zeichnungen näher erläutert. Die Zeichnungen zeigen in
- Figur 1: ein schematisches Blockdiagramm einer Ausführungsform des erfindungsgemäßen Verfahrens,
- Figur 2: ein Diagramm, welches die Auswirkungen der Einlaßspreizung auf die Luftmasse zeigt,
- Figur 3: ein Diagramm, welches die Einlaßfläche unter der Kurve für einen Ansaugzyklus zeigt und
- Figur 4: ein Diagramm, welches den Einfluß der Auslaßventile auf die Befüllung zeigt.

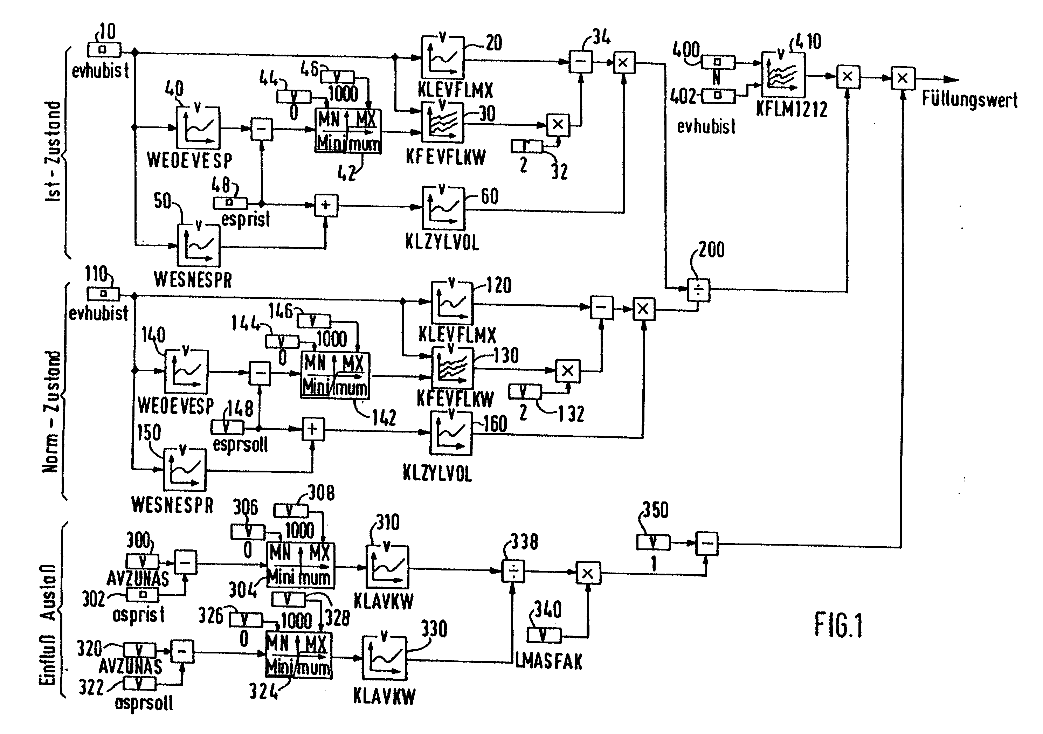

Ein spezielles Verfahren zur Bestimmung der Zylinderfüllung gemäß der Erfindung wird anhand Figur 1 erläutert, welches ein schematisches Blockdiagramm eines solchen Verfahrens darstellt.

In einem Kennfeld KFLM1212, 410, ist der angesaugte Luftmassenstrom bei fester Einlaß- und Auslaßspreizung bei den Normbedingungen 0 ° C und 1013 mbar abgelegt. Die feste Einlaß- und Auslaßspreizung beträgt vorliegend 120/120. Aus den Eingangsmotorgrößen Drehzahl N, 400, und Ist-Hub des Einlaßventils evhub-ist, 402, wird aus dem Kennfeld KFLM-1212 ein für diese Daten hinterlegter Luftmassenstrom ausgelesen. Dieser Luftmassenstrom hängt noch von der Einlaßventilbetätigung ab und ist insbesondere proportional zur freigegebenen Drosselfläche und abhängig vom Differenzdruck über das Einlaßventil. In diesem Zusammenhang wird auf die Drosselgleichung nach Bernulli hingewiesen. Demgemäß sind noch Korrekturen an dem aus dem Kennfeld KFLM-1212 ermittelten Luftmassenstrom notwendig. Vorliegend wird ein Korrekturfaktor, der sich auf die Spreizung des Einlaßventils bezieht, wie folgt bestimmt Der Einfluß auf die Luftmasse wird angenommen als das Verhältnis von Ansaugfläche multipliziert mit dem Differenzdruckanteil einer Ist-Spreizung einerseits und der Ansaugfläche multipliziert mit dem Differenzdruckanteil bei einer Normspreizung andererseits. Die Normspreizung bezeichnet dabei die Spreizung, mit der das Luftmassenkennfeld KFLM-1212 gemessen wurde. Die Ist-Spreizung hingegen bezeichnet die Spreizung im dynamischen Betrieb oder beim Kaltbetrieb.

In Figur 1 sind drei Blöcke dargestellt, die die bestimmten Einflüsse auf die Befüllung wiedergeben, nämlich der Ist-Zustand, der Norm-Zustand und der Einfluß Auslaß. Dabei bezeichnet der Ist-Zustand den Einfluß der aktuellen ist-Spreizung, wie oben bezeichnet, der Norm-Zustand den Einfluß der Normspreizung, wie oben bezeichnet, und der Einfluß Auslaß den Einfluß der Auslaßspreizung auf die Zylinderbefüllung.

Zunächst zum Einfluß bei der Ist-Spreizung (Ist-Zustand): Der Hub-Ist-Wert des Eingangventils evhub-ist, 10 wird verschiedenen Kennfeldern 20, 30, 40 und 50 zur Verfügung gestellt. In dem Kennfeld 20 (KLEVFLMX) ist die maximale Ansaugfläche aus dem Hubverlauf, aufintegriert über dem Kurbelwinkel, abgespeichert. Aus dem Kennfeld 20 wird daher die maximale Ansaugfläche ausgelesen.

Jedoch trägt die vor dem oberen Totpunkt liegende Ventilöffnung nicht zur Zylinderfüllung bei, da in dieser Phase der Kolben Restgas in den Ansaugkanal zurückschiebt. Um diesen Effekt zu berücksichtigen, wird im Kennfeld 30 (KFEVFLKW) die vor dem oberen Totpunkt liegende Ventilöffnungsfläche in Abhängigkeit von dem Öffnen des Einlaßwinkels und dem Ventilhub evhub-ist berechnet. Das Öffnen des Einlaßventils ergibt sich aus dem Einlaßventil-Ist-Spreizwert esprist, 48, welcher von dem Zeitpunkt der Öffnung des Einlaßventils vor dem Punkt des Maximalhubs abgezogen wird. Dieser Wert ergibt sich aus dem Kennfeld 40 (WEOEVESP), das als Eingangsgröße ebenfalls den Hub-Ist-Wert des Eingangsventils evhub-ist erhält. Die Einheit mit den Bezugsziffern 42, 44 und 46 dient zur Anpassung des Werts der vor dem oberen Totpunkt liegenden Ventilöffnungsfläche auf das Kennfeld 30.

Da das vor dem oberen Totpunkt in den Ansaugkanal zurückgeschobene Restgas nach dem Ansaugvorgang erst wieder angesaugt wird (Pfropfenmodell), wird die vor dem oberen Totpunkt liegende Einlaßventilfläche verdoppelt und von der maximalen Ventilöffnungsfläche abgezogen (Bezugsziffer 32).

Insgesamt liegt somit nach der Subtraktion 34 die wirksame Ansaugfläche vor.

Als nächstes wird der Einfluß des Differenzdruckes beschrieben. Die Lage der wirksamen Ansaugflächen bezogen auf den Kurbelwinkel hat einen Einfluß auf die angesaugte Luftmasse. Diese Abhängigkeit wird in dem Kennfeld 60 (KLZYLVOL) beschrieben. In dem Kennfeld 60 ist abhängig vom Kurbelwinkel das Zylindervolumen beim Ansaugen nach dem oberen Totpunkt abgelegt. Der Eingang in diese Kennlinie ist der Zeitpunkt, wenn das Einlaßventil schließt, abhängig vom Einlaßventilhub und der Spreizung. Diese Daten werden aus dem Kennfeld 50 (WESNESPR) ausgelesen. In diesem Kennfeld ist der Zeitpunkt des Einlaßventils schließen nach dem Punkt des Maximalhubes in Gradeinteilung der Kurbelwelle abgelegt. Als Eingangsgröße für das Kennfeld 50 dient ebenfalls der Hub-Ist-Wert des Einlaßventils evhub-ist, 10.

Mit der letztgenannten Maßnahme werden zwei Effekte beim Ansaugen berücksichtigt, welche den Differenzdruck über das Einlaßventil beim Ansaugen beschreiben. Zum einen wird ein "Vorspannen" des Zylinders durch ein spätes Öffnen des Einlaßventils berücksichtigt. Die Luftmasse wird durch den dadurch verursachten höheren Differenzdruck während des Ansaugens erhöht, was durch das höhere Zylindervolumen mit zunehmender Spreizung berücksichtigt wird. Zum anderen führt ein Abbruch des Ansaugens durch ein frühes Schließen des Einlaßventils bei kleineren Spreizungen zu einer Abnahme des Zylindervolumens. Auch dies wird berücksichtigt.

Vorstehend wurden somit die Einflüsse für die aktuelle Ist-Spreizung durch die wirksame Ansaugfläche und den Differenzdruckanteil bestimmt.

Eine entsprechende Berechnung erfolgt für die Normspreizung (Norm-Zustand). Mit den Bezugsziffern 110 bis 160 und dem zugeordneten Teil in Figur 1 wird in analoger Weise der Einfluß der wirksamen Ansaugfläche und des Differenzdruckanteils für die Normspreizung bestimmt. Unterschiedlich hier ist lediglich, daß in Bezugsziffer 148 der Spreiz-Soll-Wert für das Einlaßventil abgelegt ist.

Nach Berechnung der Einflüsse der Norm- und Ist-Spreizungen wird das Verhältnis gebildet (Bezugsziffer 200), welches dann als Faktor für den aus dem Kennfeld 410 ausgelesenen Luftmassenstrom dient.

Als weiterer Korrekturfaktor für den im Kennfeld 410 ausgelesenen Luftmassenstrom wird der Einfluß der Auslaßspreizung bestimmt. Dazu dient der untere Teil der Darstellung in Figur 1. Dabei wird das Verhältnis der Auslaßventilfläche nach dem oberen Totpunkt beim Ist- und Norm-Zustand gebildet (Bezugsziffer 338), welches über einen Faktor LMASFAK (Bezugsziffer 340) über eine Multiplikation skaliert wird. Dieser Wert wird von einer vorgegebenen 1 (Bezugsziffer 350) abgezogen und als Faktor ebenfalls für den Wert der angesaugten Luftmasse 410 (KFLM 1212) bestimmt. Die Werte für die verschiedenen Zweige ergeben sich durch die Öffnung des Auslaßventils AVZUNAS (Bezugsziffern 300 und 320) abzüglich der Spreizungs-lst- bzw. Soll-Werte des Auslaßventils (Bezugsziffern 302 bzw. 322). Die mit den Bezugszeichen 306, 308, 304, 324, 326 und 328 bezeichneten Funktionen stellen jeweils nur eine geeignete Skalierung für die Kennfelder 310, 330 dar.

Durch die vorgenannten Maßnahmen können die Einflüsse der Ein- und Auslaßventilspreizung auf den angesaugten Luftmassenstrom ermittelt werden. Durch Multiplizierung des aus dem Kennfeld KFLM-1212 (Bezugszeichen 410) ermittelten Luftmassenstromes erhält man so einen genauen Wert der Befüllung von Zylindern bei einem ungedrosselten Motor mit variablem Ventiltrieb.

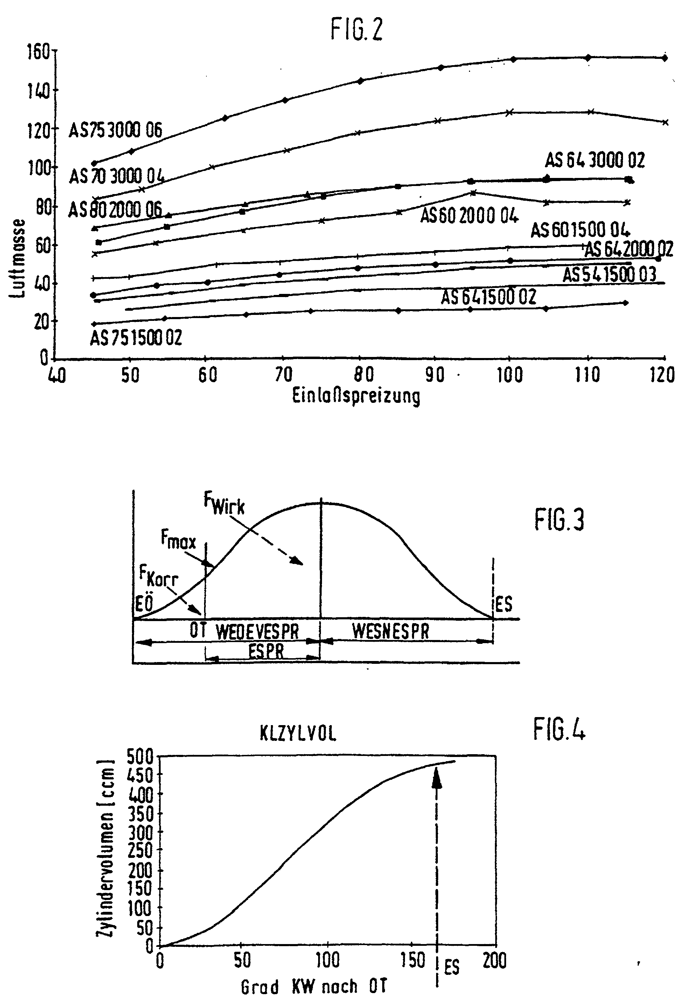

In Figur 2 ist der Einfluß der Einlaßspreizung auf die angesaugte Luftmasse dargestellt. Dabei ist für verschiedene Kennlinien gezeigt, daß bei einer zunehmenden Einlaßspreizung auch die Luftmasse im wesentlichen monoton zunimmt.

In Figur 3 ist ein Diagramm dargestellt, welches die wirksame Ansaugfläche zeigt. Die Fläche erhält man durch Integration des Hubverlaufs über den Kurbelwinkel vom Zeitpunkt des Öffnen des Einlaßventils bis zum Zeitpunkt des Schließen des Einlaßventils (ES). Dabei bezeichnet WESNESPR den Zeitpunkt "Einlaßventil Schließen" nach dem Punkt des Maximalhubs des Einlaßventils in Grad und die Größe WEOEVESPR den Zeitpunkt "Einlaßventil Öffnen" vor dem Punkt des Maximalhubs. Die Größe ESPR bezeichnet die Einlaßventilspreizung, also den Zeitpunkt zwischen dem oberen Totpunkt und dem Maximalhub des Einlaßventils. Die Gesamtfläche unter der Kurve in Figur 3 ergibt die maximale Ansaugfläche Fₘₐₓ. Davon muß die Ventilöffnungsfläche abgezogen werden, die vor dem oberen Totpunkt liegt und zur Zylinderfüllung nichts beiträgt, da in dieser Phase der Kolben Restgas in den Ansaugkanal zurückschiebt F_{Kor}. Übrig bleibt als wirksame Fläche F_{Wirk}, die in Figur 3 grau hinterlegte Fläche unter dem Graphen.

In Figur 4 ist der Einfluß der Lage der wirksamen Ansaugfläche bezogen auf den Kurbelwinkel dargestellt. Dabei zeigt das Diagramm das Zylindervolumen in Abhängigkeit von dem Kurbelwellenwinkel nach dem oberen Totpunkt. Je nach dem Zeitpunkt des Schließen des Einlaßventils ES ändert sich der Differenzdruck mit der Lage der Ansaugfläche zum Kurbelwinkel, was durch die Größe KLZYLVOL (vgl. auch Figur 1) zum Ausdruck kommt.

Insgesamt ist vorliegend ein genaues und einfaches Verfahren zur Bestimmung der Zylinderbefüllung bei ungedrosselten Verbrennungsmotoren dargestellt.

## Patentansprüche

1. Verfahren zur Bestimmung der Zylinderbefüllung bei ungedrosselten Verbrennungsmotoren, welcher Ventile mit variablem Ventiltrieb umfaßt, mit den Schritten:
- Ermittlung von zumindest einer Motorgröße,
- Bestimmen eines auf eine feste oder bestimmte Ein- und/oder Auslaßspreizung bezogenen normierten Luftmassenstromes in Abhängigkeit von der zumindest einen Motorgröße,
- Bestimmung des Einflusses der gegenüber der festen oder bekannten Einlaßspreizung vorliegenden Ist-Einlaßspreizung auf den Luftmassenstrom und Berechnung eines korrigierten Luftmassenstromes.

2. Verfahren nach Anspruch 1,
**dadurch gekennzeichnet,**
**daß** der normierte Luftmassenstrom in Abhängigkeit von der Motordrehzahl und der Hubhöhe der Einlaßventile berechnet wird.

3. Verfahren nach Anspruch 1 oder 2,
**dadurch gekennzeichnet,**
**daß** bei der Bestimmung des Einflusses der Ist-Einlaßspreizung die wirksame Ansaugfläche und/oder der wirksame Differenzdruckanteil berücksichtigt werden.

4. Verfahren nach einem der vorhergehenden Ansprüche,
**dadurch gekennzeichnet,**
**daß** der Einfluß der gegenüber der festen oder bekannten Auslaßspreizung vorliegenden Ist-Auslaßspreizung auf den Luftmassenstrom bestimmt und ein korrigierter Luftmassenstrom berechnet wird.

## Claims

1. A method for determining the cylinder air filling in unthrottled internal combustion engines, which include valves with variable valve drive, with the stages:
- the determination of at least one engine variable,
- the determination of a standardised air mass stream depending upon this at least one engine variable related to a fixed or determined input and/or exhaust expansion,
- the determination of the influence of the actual input expansion as opposed to the fixed or known input expansion on the air mass flow and the calculation of a corrected air mass flow.

2. A method according to claim 1,
**characterised in that**,
the standardised air mass flow is calculated in dependency on the motor revolutions and the lift height of the input valves.

3. A method according to claim 1 or claim 2,
**characterised in that**,
in the determination of the influence of the actual inlet expansion the effective suction area and/or the effective pressure differential is taken into account.

4. A method according to any preceding claim,
**characterised in that**,
the influence of the actual exhaust expansion present as opposed to the fixed or known exhaust expansion on the air mass flow is determined and a corrected air mass flow is calculated.

## Revendications

1. Procédé de détermination du remplissage d'air d'un cylindre d'un moteur à combustion sans papillon, comprenant des soupapes à entraînement variable, avec les étapes consistant à :
- calculer au moins un paramètre moteur,
- déterminer un débit massique d'air normé par rapport à une extension fixe ou définie de l'admission et/ou de l'échappement en fonction du paramètre moteur,
- déterminer l'influence de l'extension réelle existant par rapport à l'extension fixe ou connue de l'admission sur le débit massique d'air et calculer un débit massique d'air corrigé.

2. Procédé selon la revendication 1,
**caractérisé en ce que**
le débit massique d'air normé est calculé en fonction du régime du moteur et de la course des soupapes d'admission.

3. Procédé selon la revendication 1 ou 2,
**caractérisé en ce que**
la surface d'aspiration et/ou la proportion de pression différentielle effectives sont prises en compte lors de la détermination de l'influence de l'extension réelle d'admission.

4. Procédé selon l'une des revendications précédentes,
**caractérisé en ce que**
l'influence de l'extension réelle de l'échappement existant par rapport à l'extension fixe ou connue de l'échappement sur le débit massique d'air est déterminée, et on calcule un débit massique d'air corrigé.
